# EUROPEAN PATENT SPECIFICATION

(11) **EP 1 674 253 B1**
(45) Date of publication and mention of the grant of the patent: **10.07.2013**
(21) Application number: 05028050.2
(22) Date of filing: 21.12.2005
(51) Int. Cl.: B29D 30/16, B29D 30/60, B60C 11/00

(54) **Tire for use in a two-wheeled motor vehicle with a tread built of a wrapped layer and method for manufacturing the same**
Reifen für ein zweirädriges Motorfahrzeug mit einer Lauffläche bestehend aus einer Wickelbandage und Verfahren zur Herstellung eines solchen Reifens
Pneumatique pour véhicules à deux roues avec bande de roulement fabriquée d'une bande enroulée et procédé de son fabrication

(30) Priority: 24.12.2004 JP 2004373975
(43) Date of publication of application: 28.06.2006
(73) Proprietor: Sumitomo Rubber Industries, Ltd., Kobe-shi, Hyogo-ken (JP)
(72) Inventor: Tanaka, Takashi Sumitomo Rubber Industries, Ltd., Kobe-shi Hyogo-ken (JP)
(74) Representative: Manitz, Finsterwald & Partner GbR

(56) References cited:
- EP-A- 1 211 057
- EP-A- 1 358 998
- GB-A- 1 438 288
- US-A- 3 223 572
- PATENT ABSTRACTS OF JAPAN vol. 2002, no. 06, 4 June 2002 (2002-06-04) & JP 2002 046194 A (BRIDGESTONE CORP), 12 February 2002 (2002-02-12)
- PATENT ABSTRACTS OF JAPAN vol. 2000, no. 07, 29 September 2000 (2000-09-29) & JP 2000 094542 A (SUMITOMO RUBBER IND LTD), 4 April 2000 (2000-04-04)

## Description

### BACKGROUND OF THE INVENTION

### 1. Field of the Invention

The present invention relates to methods for manufacturing a tire for use in a two-wheeled motor vehicle of improved uniformity.

Relevant methods are known from EP-A-1 211 057. EP-A-1 358 998 and US-A-3 223 572.

### 2. Description of the Background Art

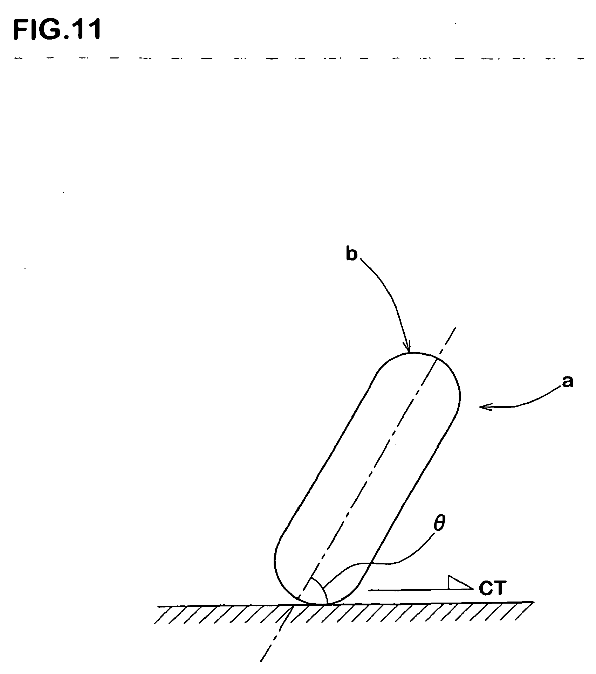

As illustrated in Fig. 11, turning movements are performed with a two-wheeled motor vehicle by applying a camber angle (θ) to a tire (a) and causing camber thrust (CT) at the tire (a). For enabling such turning movements, a tread portion (b) of a tire (a) for use in a two-wheeled motor vehicle is arranged in that a tire meridian section of its tread surface is curved in an arc-like manner that becomes convex towards outside in a tire radial direction.

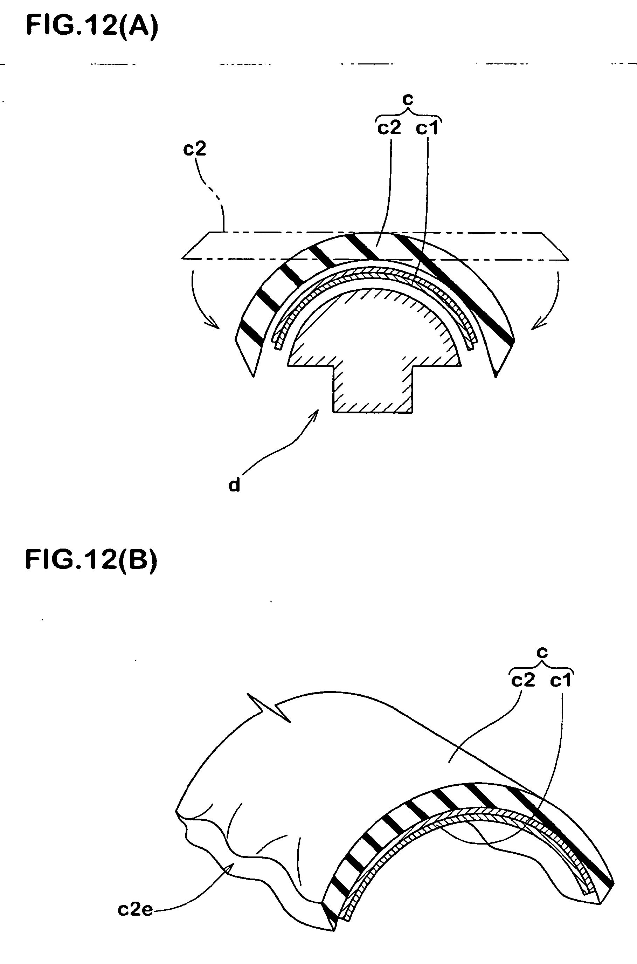

Further, the tire for use in a two-wheeled motor vehicle is manufactured by vulcanization molding a green cover that has been obtained by joining a tread ring (c) as illustrated in Fig. 12 (B) to a carcass. Fig. 12 (A) illustrates a part of a general manufacturing process of the tread ring (c). The tread ring (c) is formed into an annular shape by first winding a cord layer (c1) such as breaker or a belt to a profile deck (d) and then winding a tread rubber (c2) outside thereof in a circumferential direction.

However, while an outer peripheral surface of the profile deck (d) is curved in a convex arc-like manner in its meridian section, the tread rubber (c2) that has been extruded from an extruder assumes a flat strip-like shape as illustrated by the virtual line. Accordingly, when performing a step of adhering both side edges of the tread rubber (c2) in the width direction along the profile deck (d) upon curving and deforming the same (so-calledstitchdownstep), defectivemoldingssuchaswrinkles or ruffling are apt to occur at both side edges (c2e) of the tread rubber (c2) . While it is possible to mend such defective moldings to some extent through adjustment, a part thereof will cause worsening of uniformity in such a tire for use in a two-wheeled motor vehicle. In a tire for use in a two-wheeled motor vehicle of poor uniformity, oscillation is apt to occur during running so as to result in worsening of steering stability and riding comfort.

### SUMMARY OF THE INVENTION

It is an object of the present invention to provide methods for manufacturing a tire for use in a two-wheeled motor vehicle capable of preventing defective moldings such as wrinkles and ruffling formed at both side portions of a tread rubber and of improving uniformity.

The methods of the present inventions are defined in the claims.

With the arrangements defined in the claims. it is possible to form a strip wound body in which the rubber strip on the front surface side that comprises the tread surface is wound from the tread ends towards the tire equator.

The present invention is arranged in that a tread rubber of a tire for use in a two-wheeled motor vehicle which ratio (TW/h) of its tread width TW to a camber amount h is limited to 1.0 to 7.0 is comprised of a strip wound body. Accordingly, operations such as stitch-downing as were conventionally necessary can be eliminated and it is possible to prevent defective moldings such as wrinkles and ruffling at both side portions of the tread rubber. It is accordingly possible to provide a tire for use in a two-wheeled motor vehicle that exhibits superior conformity. By particularly limiting an angle of the rubber strip on the front surface side that comprises the tread surface with respect to the tire circumferential direction to be less than 15°it is possible to achieve both of uniformity and durability of the tread rubber.

When the rubber strip on the front surface side is wound from both tread ends towards the tire equator, the interface of the rubber strip will be inclined outside in the tire axial direction towards the tread surface side. More particularly, the interface will be inclined in a direction that is identical to that of the camber thrust that acts on the tread surface when the two-wheeled motor vehicle performs turning movements. The interface accordingly receives force in a direction that is closed by the camber thrust so that peeling of the rubber strip at the interface is restricted.

### BRIEF DESCRIPTION OF THE DRAWINGS

Fig. 1 is a sectional view of a tire for use in a two-wheeled motor vehicle illustrating an embodiment of the present invention;
Fig. 2 is a perspective view of a rubber strip;
Fig. 3 is an exploded view of a tread rubber;
Fig. 4(A) and Fig. 4(B) are partial sectional views of a tread rubber;
Fig. 5 is a perspective view illustrating an example of a molding device for a strip wound body;
Fig. 6 is a sectional view of an object to be wound;
Fig. 7 is a sectional view for explaining an applicator having two heads;
Fig. 8 is a sectional view illustrating one example of a strip wound body forming step;
Fig. 9(A) to Fig. 9(C) are sectional views illustrating another example of a strip wound body forming step;
Fig. 10(A) and Fig. 10(B) are schematic views for explaining another strip wound body forming step;
Fig. 11 is a front schematic view of a tire for explaining a camber thrust; and
Fig. 12(A) is a sectional view for explaining a conventional method for manufacturing a tire for use in a two-wheeled motor vehicle and Fig. 12 (B) is a partial perspective view of a conventional tread ring.

### DESCRIPTION OF THE PREFERRED EMBODIMENT

One embodiment of the present invention will now be explained on the basis of the drawings.

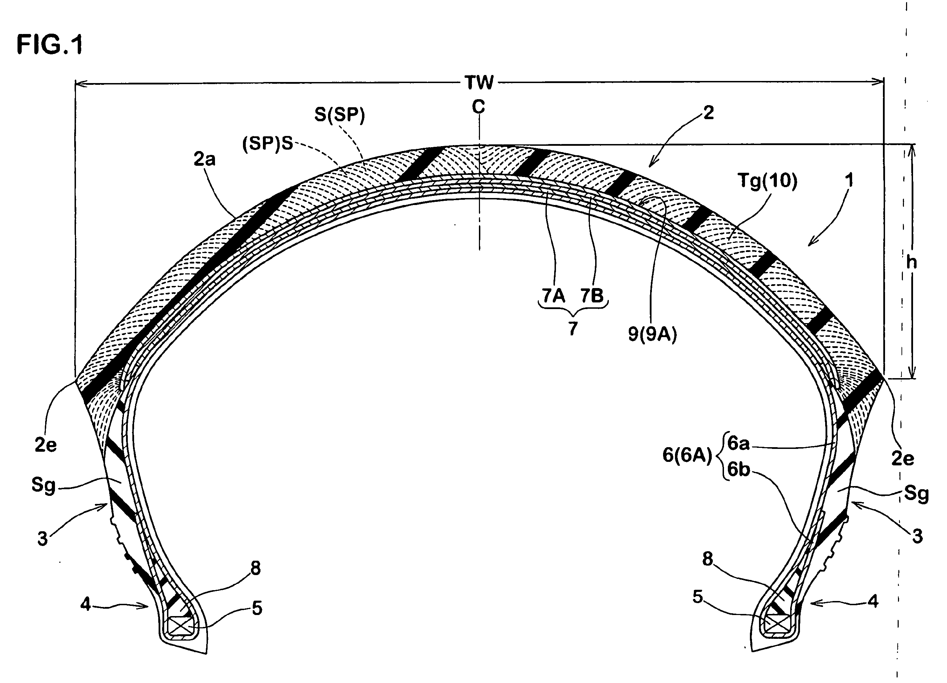

Fig. 1 is a meridian sectional view illustrating a tire for use in a two-wheeled motor vehicle that has been manufactured by the manufacturing method of the present invention.

The tire 1 for use in a two-wheeled motor vehicle comprises a tread portion 2, a pair of sidewall portions 3 that extend from both ends, that is, tread ends 2e, 2e, inward in the tire radial direction, and bead portions 4 that are located at inner ends of the respective sidewall portions 3. The tread surface 2a that comprises an outer surface of the tread portion 2 is formed to have a smooth arc-like contour that becomes convex towards outside in the tire radial direction.

Fig. 1 illustrates a tire for use in a two-wheeled motor vehicle in a normal internal pressure condition in which the tire is assembled to a normal rim (not shown in the drawings), filled with normal internal pressure and is in a condition in which no load is applied thereto. In such a normal internal pressure condition of the tire 1 for use in a two-wheeled motor vehicle of the present invention, a tread width TW, which is a distance between the tread ends 2e, 2e in the tire axial direction, comprises a tire maximum width. With this arrangement, it is possible to obtain a sufficient grounding area also when performing turning in which a camber angle is given.

Further, in the normal internal pressure condition, the tire 1 for use in a two-wheeled motor vehicle is arranged in that a ratio (TW/h) of the tread width TW to a camber amount h, which is a distance from the tread ends 2e to the tire equator C in the tire radial direction, is set to be 1.0 to 7.0. Where this ratio (TW/h) is less than 1.0, the curvature of the tread surface 2e will become remarkably large so that no practical steering stability can be achieved. On the other hand, where the ratio (TW/h) becomes larger than 7.0, the tread surface 2e will not be projecting that much outward in the tire radial direction. It will accordingly be possible to obtain a tire for use in a two-wheeled motor vehicle with little degradations in uniformity also with a conventional manufacturing method so that there is no necessity of applying the present invention. The tire for use in a two-wheeled motor vehicle that is to be covered by the present invention is limited to one which ratio (TW/h) is in the range of 1.0 to 7.0 and more preferably in the range of 2.0 to 5.0.

Here, the term "normal rim" denotes a rim defined for each tire in accordance with a standardizing system including the standard on which the tire is based, and may be a normal rim according to JATMA, a "design rim" according to TRA and a "measuring rim" according to ETRTO. The term "normal internal pressure" denotes an air pressure that is defined for each tire in accordance with a standardizing system including the standard on which the tire is based, and may be a maximum air pressure according to JATMA, a maximum value as recited in the table of "tire load limits at various cold inflation pressures" according to TRA, and "inflation pressure" according to ETRTO.

The tire 1 for use in a two-wheeled motor vehicle of the present embodiment further comprises a toroidal carcass 6, a belt layer 7, and a band layer 9.

The carcass 6 of the present embodiment is formed of a single carcass ply 6A. The carcass ply 6A is formed, for instance, of a main body portion 6a that extends between the bead cores 5, 5 and turned up portions 6b that continue from the main body portion 6a and that are folded over around the bead cores 5. The carcass ply 6A further comprises carcass cords that are aligned at an angle of, for instance, 75° to 90°, and more preferably of 80 to 90° with respect to the tire equator C. Organic cords such as nylon, polyester or rayon are suitably used as the carcass cords. A bead apex rubber 8 that extends from the bead cores 5 outside in the tire radial direction in a tapered manner is disposed between the main body portion 6a and the turnedup portions 6b of the carcass ply 6A for reinforcing the bead portions 4.

The belt layer 7 is comprised of at least one, and preferably two belt plies 7A, 7B that overlap inside and outside in the tire radial direction. The belt plies 7A, 7B include belt cords that are aligned at an angle of, for instance, 15 to 50° with respect to the tire equator C, and the intersecting belt cords between the plies reinforce the belt rigidity. While organic fiber cords are suitable for use as the belt cords, it is also possible to employ steel cords where necessary. The belt plies 7A, 7B are further curved in a convex arc-like manner at a contour that approximates that of the tread surface 2a.

The band layer 9 is comprised of a so-called jointless band ply 9A with band cords being spirally wound with respect to the tire circumferential direction at an angle of not more than 5°. More particularly, the band ply 9A is formed by spirally winding, along the tire circumferential direction, a strip-like ply of small width in which a single or a plurality (preferably not more than 10) band cords is coated with topping rubber. Organic fiber cords such as aramid, polyester, nylon or rayon are suitably used as such band cords. The band ply 9A is formed to cover substantially the entire width of the belt layer 7.

Moreover, a tread rubber Tg that comprises an outer surface of the tread portion 2 and a sidewall rubber Sg that comprises an outer surface of the sidewall portions 3 are respectively disposed outside of the carcass 6.

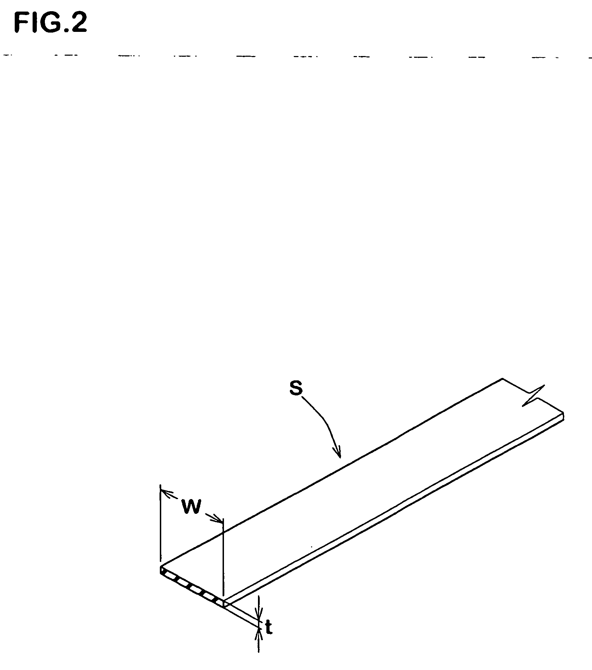

Unlike a conventional extruded article obtained by uniformly extruding using an extruder, the tread rubber Tg is formed of a strip wound body 10. More particularly, the tread rubber Tg of Fig. 1 is obtained by vulcanizing the strip wound body 10 within a tire vulcanization mold. The strip wound body 10 is obtained by winding a strip-like rubber strip S with a small width W and a small thickness t (as illustrated in Fig. 2) spirally in the tire circumferential direction to shape it into a specified sectional shape. In case of this strip wound body 10, the curved sectional shape of the tread rubber can be directly obtained without the necessity of performing a conventional stitch down step of the tread rubber. No wrinkles or similar are accordingly generated at side portions of the tread rubber so that the uniformity of the tire can be maintained high.

The rubber strip S has a flattened shape which width W is larger when compared to the thickness t. In the present example, the section is shaped to be substantially rectangular. The rubber strip S is limited to have a width W of 5 to 30 mm and a thickness t of 0.3 to 1.5 mm. Where the width W of the rubber strip S is less than 5 mm or the thickness t less than 0.3 mm, the number of winding the same for forming a strip wound body 10 will remarkably increase to degrade the productivity. On the other hand, where the width W is larger than 30 mm and the thickness t larger than 1.5 mm, it will become difficult to form a strip wound body 10 of complicated sectional shape. From this point of view, the width W of the rubber strip S is more preferably in the range of 15 to 25 mm. The thickness t is more preferably in the range of 0.5 to 1.3 mm. The section of the strip S is not limited to a rectangular shape, and it may also comprise selvage portions of reduced thickness on one or both sides in the width direction.

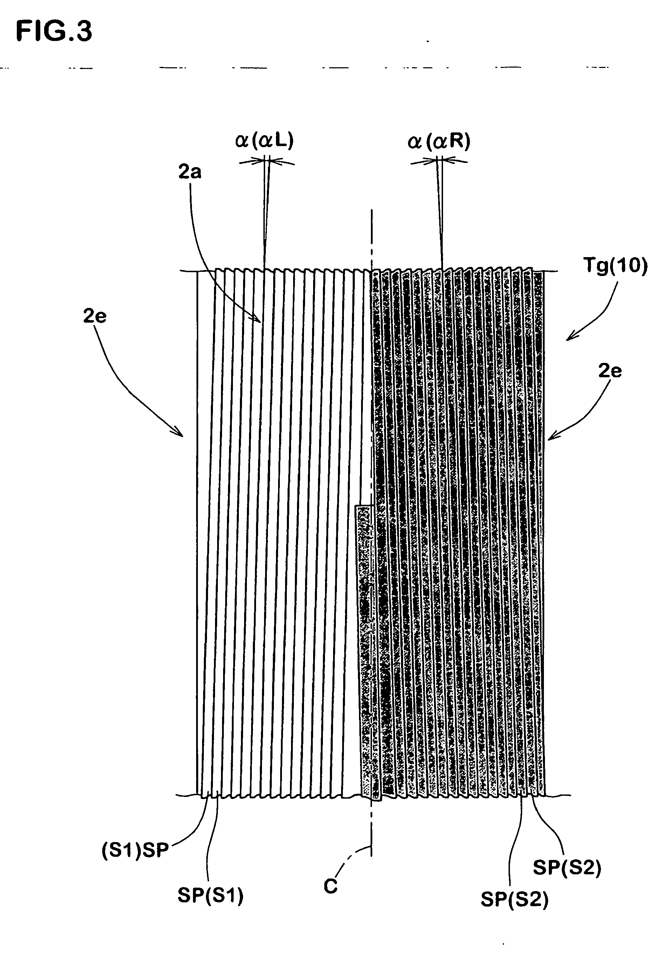

Fig. 3 illustrates an exploded view in which the tread rubber Tg is developed in a planar form. For ease of understanding, boundaries of the rubber strip SP on the front surface side that comprises the tread surface 2a is indicated by a solid line in this drawing.

In the tire 1 for use in a two-wheeled motor vehicle of the present invention, at least the rubber strip SP on the front surface side is wound at an angle α of less than 15° with respect to the tire circumferential direction. The rubber strip SP on the front surface side is further wound from the tread ends 2e towards the tire equator C and terminate at the tire equator C or proximate thereof. In this respect, terminating at the tire equator C means that at least a part of the winding end of the rubber strip SP is located on the tire equator C. The term "terminating proximate of the tire equator C" indicates a condition in which at least a part of the winding end is located in a region that is apart from the tire equator C in the tire axial direction by a distance twice than the width W of the rubber strip S.

Since the rubber strip SP on the front surface side directly contacts with the road surface, it will largely affect uniformity and durability. By thus limiting the angle α to be in the above-described range, it is possible to improve the durability and uniformity of the tread rubber Tg in a well-balanced manner.

Where the angle α is not less than 15°, wrinkles or similar are apt to be formed on one side edge of the rubber strip when performing winding so that air is apt to be accumulated at such portion. This will cause a drawback in that defective vulcanization such as so-called air-under tread (AUT) is caused to degrade the uniformity. In view of this fact, the angle α is preferably not more than 12°, and further not more than 10°. A lower limit of the angle α is not particularly defined and the angle α can be reduced up to substantially 0° at the beginning of winding or end of winding. However, the strip is thereafter wound at an angle that is larger than 0°.

As illustrated in Fig. 3, the tread rubber Tg of the present embodiment is formed from a first rubber strip S1 in which at least the rubber strip SP on the front surface side is wound from one tread end 2e towards the tire equator C and a second rubber strip S2 that is wound from the other tread end 2e towards the tire equator C and that terminates in a condition in which it is overlapped with the first rubber strip S1 on the tire equator C or proximate thereof. Both of the angles αL, αR of the first and second rubber strips S1, S2 satisfy the above range. In Fig. 3, the second rubber strip S2 is slightly colored for the purpose of discrimination. In this respect, while the first rubber strip S1 and the second rubber strip S2 are comprised of rubber of identical composition, suitably changes are possible.

In the tread rubber Tg that is comprised of the strip wound body 10, the strength of the interface E between rubber strips tends to be relatively degraded after vulcanization. By defining the winding direction of the rubber strip S of the strip wound body 10 of the present embodiment in the above-described manner, effects of external force acting on the interface E can be restricted to minimum.

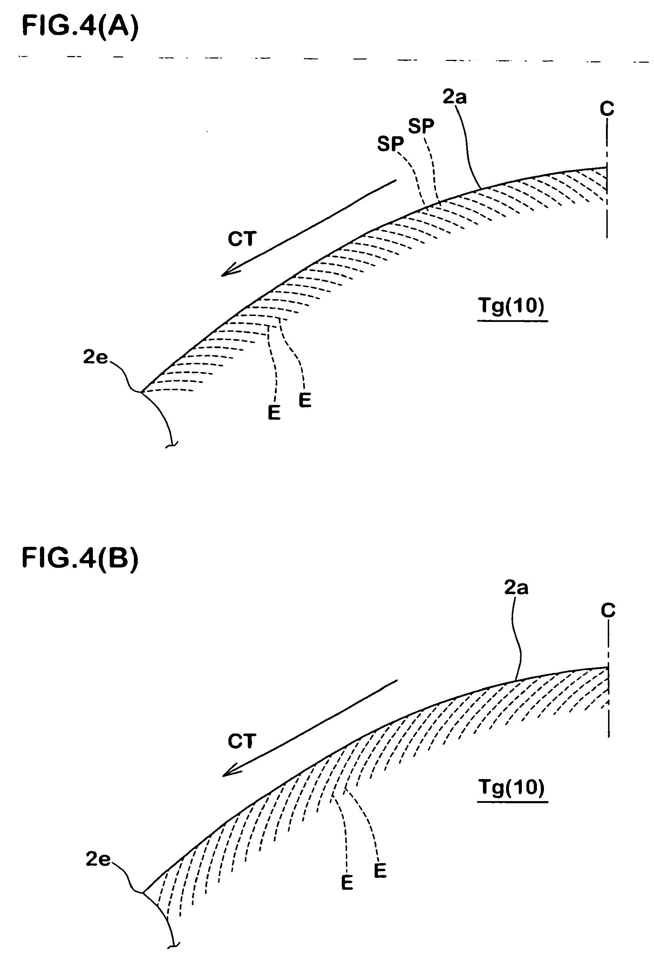

More particularly, as illustrated in Fig. 4 (A), the rubber strip SP on the front surface side is spirally wound from the tread end 2e towards the tire equator C while sequentially overlapping side edge portions thereof. In such an instance, the interface E of the rubber strip SP on the front surface side will be inclined to the tread end 2e side (outside in the tire axial direction) towards the tread surface 2a. On the other hand, the camber thrust CT acts onto the tread surface 2a in a direction from the tire equator C towards the tread end 2e. Accordingly, the camber thrust CT acts to suppress the interface E of the rubber strip SP on the front surface side to close the same. Such actions prevent peeling of the interface E between rubber strips SP, SP and improves durability.

In contrast thereto, when the rubber strip SP on the front surface side is spirally wound from the tire equator C to the tread end 2e contrary to the present embodiment and as illustrated in Fig. 4 (B), the camber thrust CT acts in a direction of peeling the interface E. This accordingly degrades the durability. In this respect, the angle α of the rubber strip SP on the front surface side is substantially constant in the tread rubber Tg of the present embodiment. However, it is also possible to suitably change the angle α within the above range. It is particularly desirable to reduce the angle α to approximately 0° at the beginning of winding or at the end of winding of the rubber strip S.

Next, an embodiment of a method for manufacturing such a tire 1 for use in a two-wheeled motor vehicle will be explained. The tire for use in a two-wheeled motor vehicle according to the present embodiment is manufactured upon performing a green cover forming step for forming a green cover and a step of vulcanizing the green cover in a tire vulcanization mold. In thisrespect, since the vulcanization step is performed following custom, it will not be explained here. The green cover forming step includes a strip wound body forming step for forming the above-described strip wound body 10.

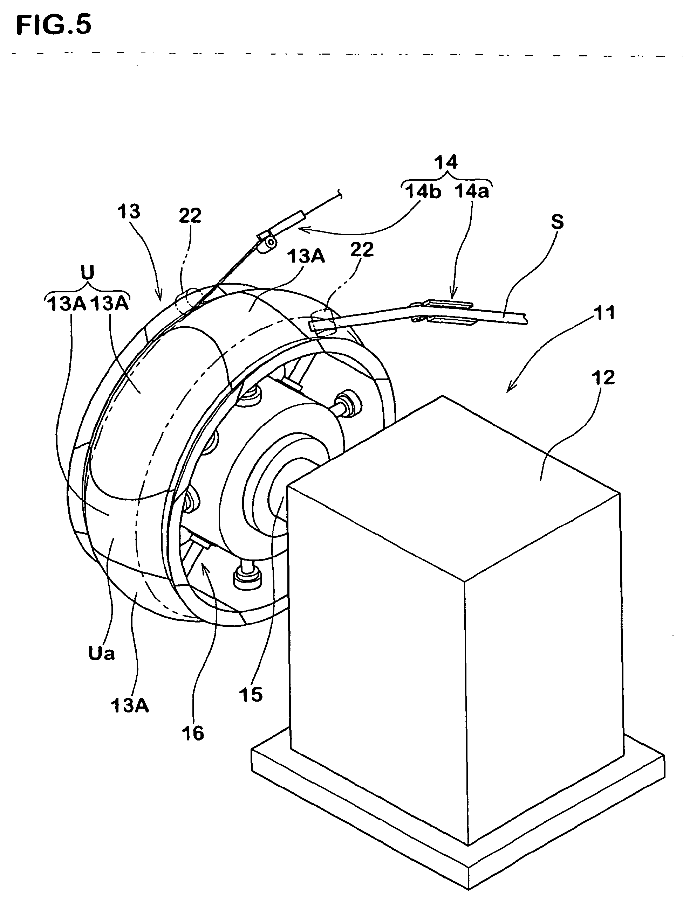

The strip wound body forming step is performed by using, for instance, a molding device 11 as illustrated in Fig. 5. The molding device 11 includes a base 12, an annular molding former 13 supported on the base 12 in a freely rotating manner, and an applicator 14 for supplying the rubber strip S to the molding former 13.

The base 12 includes, in its interior, a motor and a power transmission device that rotates the molding former 12 upon transmitting torque of the motor thereto. The torque of the motor is output to a rotating shaft 15 that is supported by the base 12 in a rotatable manner.

The molding former 13 includes a plurality of segments 13A aligned in the tire circumferential direction and an expanding/contracting mechanism (not illustrated in details 16 that is provided inward in the radial direction for moving the segments 13A inward and outward in the tire radial direction. Outer surfaces of the respective segments 13A are successive in the tire circumferential direction at positions in which the segments 13A are moved outside in the tire radial direction through the expanding/contracting mechanism 16. The rubber strip S of the present embodiment is spirally wound outside of the molding former 13 comprising the object to be wound U.

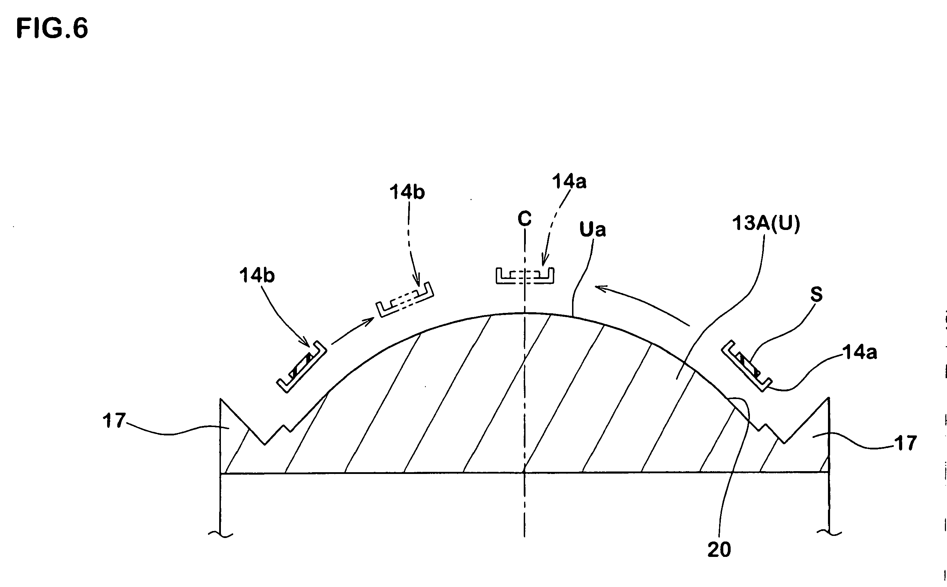

An outer peripheral surface Ua of the object to be wound U assumes a contour that is curved in an arc-like manner that becomes convex towards outside in the radial direction in the meridian section as illustrated in Fig. 6. Flange portions 17 that project outward in the radial direction are provided at both sides of the outer peripheral surface Ua. The flange portions 17 prevent positional shift of the rubber strip S wound around the object to be wound U to outside in the tire axial direction.

The molding device 11 can reduce the diameter of the outer peripheral surface Ua of the object to be wound U by moving the respective segments 13A alternately inward in the tire radial direction. With this arrangement, the strip wound body 10 wound around the object to be wound U can be easily detached. The expanding/contracting mechanism 16 is fixedly attached to the rotating shaft 15. The molding former 13 can accordingly rotate with the rotating shaft 15 in a specified direction and at a specified velocity. The expansion and contraction of the diameter of the segments 13A or the rotating velocity of the molding former 13 is suitably adjusted through a controller (not shown) .

The applicator 14 is arranged to include a first and a second supply head 14a, 14b of, for instance, conveyer style that are capable of guiding the strip-like and non-vulcanized rubber strip S to a specified position of the object to be wound U and, for instance, a three-dimensional moving device (not shown) that moves the respective heads 14a, 14b in a mutually independent manner.

As illustrated by the virtual line in Fig. 6, the first and second heads 14a, 14b are freely movable in the tire axial direction along the outer peripheral surface Ua of the object tobe wound U for guiding the rubber strip S to a specified position of the object to be wound U.

As illustrated in Figs. 5 to 7, the first and second heads 14a, 14b of the present embodiment are arranged in that they are disposed while being shifted in position in the tire axial direction and the tire circumferential direction (in the present embodiment at angle β) with respect to the object to be wound U. In the present embodiment, the first supply head 14a is capable of successively supplying the first rubber strip S1 to a specified position of the object to be wound U. The second supply head 14b is capable of successively supplying the second rubber strip S2 to a specified position of the object to be wound U independently from the first rubber strip S1.

While not illustrated, a rubber extruder or a calendar for successively extruding the rubber strip S and a festoon capable of temporarily controlling the supply speed of the rubber strip S are provided upstream of the applicator 14.

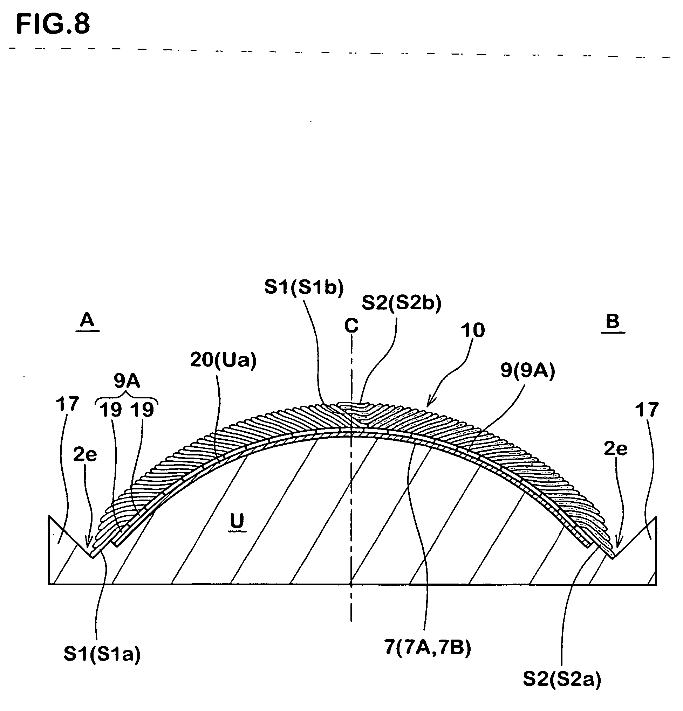

Fig. 8 illustrates one example of a strip wound body forming step.

The belt plies 7A, 7B are preliminarily wound around the outer peripheral surface Ua of the object to be wound U and respective end portions thereof are joint. The strip-like ply 19 is spirally wound along the circumferential direction outside thereof so as to comprise the jointless band ply 9A that covers the entire width of the belt plies 7A, 7B. In this respect, it is desirable that a concave portion 20 having a depth that is equivalent to the total thickness of the cord layers such as the belt plies 7A, 7b or the band ply 9A is preliminarily provided on the outer peripheral surface Ua of the object to be wound U as illustrated in Fig. 6 in exemplar form. With this arrangement, the cord layer can be formed at an accurate position with respect to the object to be wound U and it is possible to prevent formation of a stepped portion through the cord layer on the outer peripheral surface Ua of the object to be wound U.

Next, a winding start end S1a of the first rubber strip S1 and a winding start end S2a of the second rubber strip S2 are respectively adhered to the outer peripheral surface Ua of the object to be wound U. In the present example, the winding start end S1a of the first rubber strip S1 is fixed to an end portiononone side A in the axial directionof the outer peripheral surface Ua of the object to be wound U. On the other hand, the winding start end S2a of the second rubber strip S2 is fixed to an end portion on the other side B in the axial direction of the outer peripheral surface Ua of the object to be wound U. The respective winding start ends S1a, S2a form the tread ends 2e, 2e of the tread rubber Tg. Accordingly, an end portion of the strip wound body 10 might also be referred to as the tread end 2e for convenience's sake.

The respective rubber strips S1, S2 exhibit viscosity since they are not vulcanized. Accordingly, fixing of the winding start ends S1a, S2a to the obj ect to be wound U is easily performed by pressing the outside of the rubber strip S through a press roller 22 or similar as illustrated, for instance, in Fig. 5 by the virtual line. In this respect, a "non-vulcanized" condition of rubber indicates a condition in which vulcanization has not been completely finished. Thus, a half-vulcanized condition in which the rubber has just undergone preliminary vulcanization is also referred to as a non-vulcanized condition.

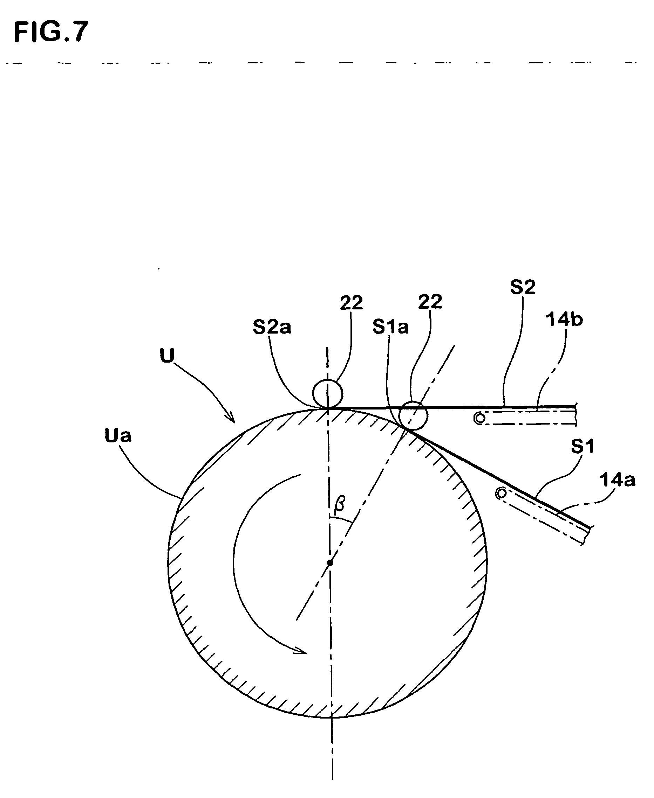

Thereafter, the object to be wound U is rotated in the direction of the arrow in Fig. 7 while both of the first head 14a and the second head 14b are moved towards the tire equator C side along the outer peripheral surface Ua of the object to be wound U. With this arrangement, the rubber strips S1, S2 are successively wound around the object to be wound U while overlapping respective side edge portions thereof. In this respect, at the initial stage of winding, it is desirable to perform winding for approximately a single round upon defining the angle α to be 0°.

In the present embodiment, the first rubber strip S1 and the second rubber strip S2 are wound from the tread end 2e side to the tire equator C side in a range of approximately half the width of the tread ranging from the tread ends 2e to the tire equator C. At this time, by controlling the moving velocity of the respective heads, the first and second rubber strips S1, S2 are respectively wound at an angle that is larger than 0.1° and less than 15° with respective to the tire circumferential direction. The moving direction and the moving velocity of the respective supply heads 14a, 14b are preliminarily determined, among others, on the basis of the number of rotation of the object to be wound U, the targeted sectional shape of the strip wound body 10, and the sectional shape of the rubber strip, and are controlled by the controller.

Winding of the respective rubber strips S1, S2 is terminated substantially at the position of the tire equator C whereupon the strips are cut. At this time, it is desirable to wind the rubber strips for a single round with the angle α being defined as 0°. Then, one rubber strip (in the present example, the second rubber strip S2) is overlapped outside of the winding end S1b of the other rubber strip (in the present example, the first rubber strip S1). With this arrangement, a strip wound boy 10 extending over the entire width of the tread width Tw is formed. In the present embodiment, an overlapping width of the rubber strips is defined to be large by setting a small winding pitch for the rubber strips in the tire axial direction. With this arrangement, it is possible to secure a sufficient rubber gauge so that the tread rubber is formed through so-called single layer winding and thus exhibits superior productivity.

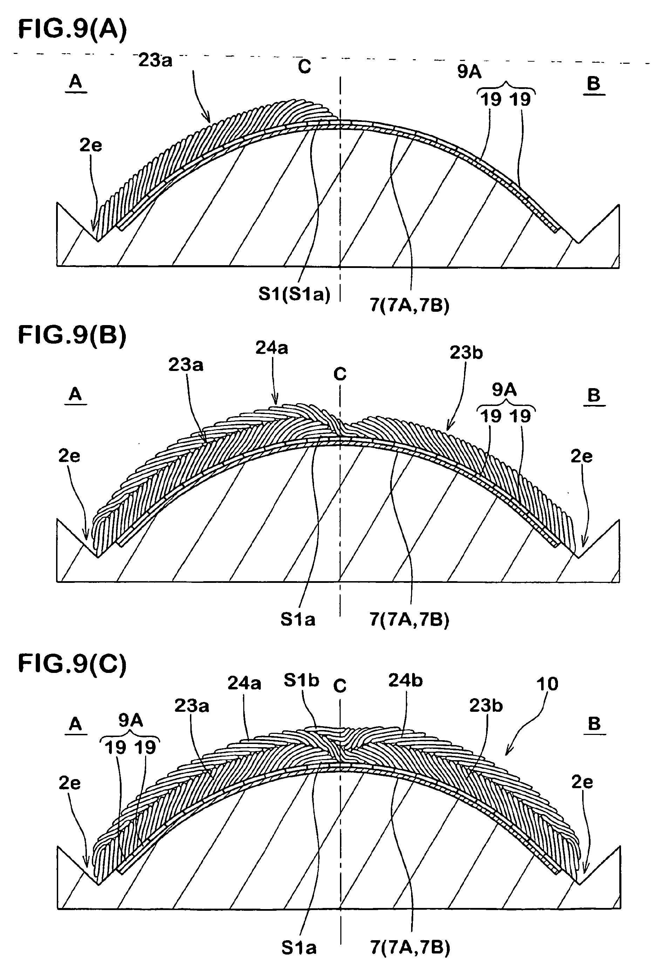

Figs. 9(A) to Fig. 9(C) illustrate another example of a strip wound body forming step.

This example is suitable when the applicator 14 comprises only one supply head 14a. In other words, the strip wound body 10 is formed by using a single rubber strip (in the present example, the first rubber strip S1).

More particularly, as illustrated in Fig. 9(A), a first phase of winding the rubber strip S1 from the winding start end S1a provided at a position between the tread ends 2e, 2e towards the tread end 2e on one side A is performed. In the present example, the winding start end S1 is located on the tire equator C. Through the first phase, one inner layer portion 23a that comprises substantially half the width of the tread rubber Tg is formed.

Next, as illustrated in Fig. 9 (B), a second phase of winding the rubber strip S2 up to the tread end 2e on the other side B upon changing the winding direction without cutting the rubber strip S1 at the tread end 2e on the one side A. Through this phase, one outer layer portion 24a comprising substantially half the width is formed outside of the one inner layer portion 23a in the tire radial direction and another inner layer portion 23b comprising substantially half the width in which the rubber strip S is spirally wound from the tire equator C to the tread end 2e on the other side B is formed.

Further, as illustrated in Fig. 9(C), a third phase of winding the rubber strip S1 without cutting the same at the tread end 2e on the other side B but again changing the winding direction up to the tire equator C or proximate thereof to terminate thereat is performed. Through this phase, another outer layer portion 24b comprising the remaining substantially half width is formed outside of the other inner layer portion 23b in the tire radial direction. In the present example, the winding end S1b is overlapped outside of the winding start end S1a in the radial direction.

The rubber strip SP on the front surface side that appears on the tread surface 2a, that is, the rubber strip S1 that comprises the one outer layer portion 24a and the other outer layer portion 24b are both wound from the tread end 2e towards the tire equator C. It is accordingly possible to exhibit high durability against camber thrust as stated above. The angle α of the rubber strip SP on the front surface side satisfies the above-mentioned range.

In the present embodiment, the strip wound body 10 is formed as a two-layered structure comprised of the inner layer portion and the outer layer portion. As a result, the rubber gauges of the respective layers can be made thin (for instance, half the thickness of Fig. 8) when compared to the embodiment of Fig. 8. In other words, since the winding pitch of the rubber strip S can be made large, it is possible to secure accuracy of thickness of the strip wound body 10 which serves to improve the quality.

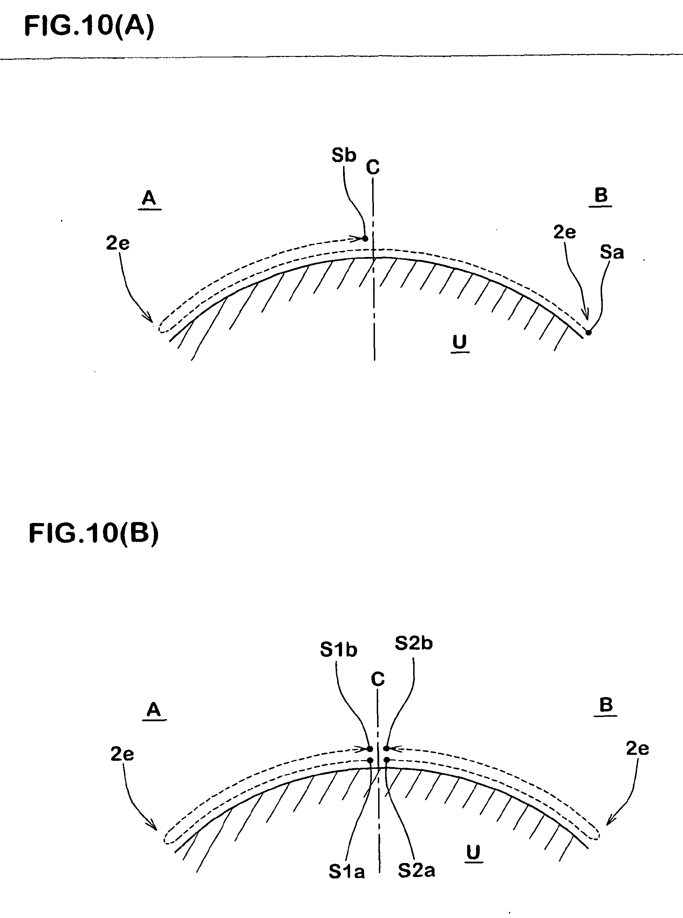

Fig. 10(A) and Fig. 10(B) illustrate another embodiment of the strip wound body forming step. Fig. 10(A) illustrates a case in which after performing a first phase of winding the rubber strip S from the tread end 2e on the other side B to the tread end 2e on the one side A, a second phase is performed in which the winding direction of the rubber strip S is inverted at the tread end 2e on the one side A and winding is terminated to terminate at the tire equator C or proximate thereof. In such a case, by defining the winding pitch of the rubber strip S between the tread end 2e on the other side B and the tire equator C to be half the winding pitch of the rubber strip S between the tread end 2e on the one side A and the tire equator C, it is possible to form the strip wound body 10 to be substantially symmetric in shape and thickness around the tire equator C.

In the form of Fig. 10(B), which is similar to the form of Fig. 8, the winding start end S1a of the first rubber strip S1 and the winding start end S2a of the second rubber strip S2 are located on the tire equator C or proximate thereof. In the illustrated case, winding is started from the winding start ends S1a, S2a towards tread ends 2e, 2e in opposite directions while winding directions are inverted at the respective tread ends 2e whereupon winding is terminated at the tire equator C or proximate thereof. In this manner, forms of performing winding of the rubber strips can be variously changed.

The tread ring that is comprised of the thus obtained strip wound body 10, belt layer 7 and the band layer 9 is adhered outside of a green carcass (not shown) shaped into a toroidal shape to form a green cover. While the present embodiment illustrates a case in which the rubber strip is wound around the object to be wound U that is comprised of segments 13A of a molding former 13, it is alternatively possible to directly wind the rubber strip on a green carcass that is shaped into a toroidal shape.

While particularly preferred embodiments of the present invention have been described in details, the present invention is not limited to the illustrated embodiments alone but may be embodied upon modifying the same into various forms.

### Examples

For confirming effects of the present invention, radial tires for use in two-wheeled motor vehicles having a size of 180/55ZR17 were manufactured on trial according to specifications of Table 1 for comparing uniformity and durability performances thereof. Internal structures of the respective tires were common to all in the following manner.
Carcass: a single carcass ply made of nylon cords
Belt layer: two plies made of nylon cords
Band layer: a single jointless band ply made of aramid cords
Evaluations were performed in the following manner.

### <Uniformity>

Uniformity performances were measured using a cornering tester in conformity to uniformity test conditions of JASO C607:2000 in view of radial force variation (RFV), lateral force variation (LFV), radial run out (RRO), radial run out-top side (RRO-T), and radial run out-bottom side (RRO-B). In this respect, respective tires were vulcanized and molded using an upper and lower two-split mold wherein the top side of RRO indicates a RRO of a shoulder portion molded on the upper mold side and the bottom side a RRO of a shoulder portion molded on the lower mold side of the upper and lower two-split mold. The rim size was defined to be 17 x MT5.50, the internal pressure the maximum air pressure according to JATMA and the load the maximum load according to JATMA. All of the results are average values (N) of 20 tires, and the smaller the values are, the more favorable they are.

### <Durability>

Respective sample tires were made to run on a drum having a diameter of 1.7 m under conditions for the longitudinal load being 3.6 kN, for the velocity 50 km/h, and for the camber angle 20°, and running distances at which damages were generated on the tread surface were obtained. In this respect, the rim and the internal pressure were as stated above. Results are indicated as indices with that of the running distance of Comparative Example 1 being defined as 100. The larger the values are, the more favorable they are.

Test results are indicated in Table 1.

**Table 1**

| | | Comparative Example 1 | Comparative Example 2 | Comparative Example 3 | Embodiment 1 | Embodiment 2 | Embodiment 3 | Embodiment 4 | Comparative Example 4 |
|---|---|---|---|---|---|---|---|---|---|
| Ratio (TW/h) | | 3.5 | 7.0 | 10.0 | 3.5 | 5.0 | 7.0 | 7.0 | 10.0 |
| Width w of rubber strip [mm] | | - | - | - | 22 | 22 | 22 | 22 | 22 |
| Thickness t of rubber strip [mm] | | - | - | - | 1.0 | 1.0 | 1.0 | 1.0 | 1.0 |
| Angle α of rubber strip | | - | - | - | 2 | 2 | 2 | 10 | 17 |
| Drawing illustrating the method for forming the tread rubber | | Fig. 12 | Fig. 12 | Fig. 12 | Fig. 8 | Fig. 8 | Fig. 8 | Fig. 8 | Fig. 8 |
| Test results | RFV (O.A.) [N] | 50 | 37 | 24 | 36 | 29 | 22 | 39 | 44 |
| | LFV (O.A.) [N] | 26 | 21 | 13 | 17 | 15 | 11 | 19 | 24 |
| | RRO (O.A.) [mm] | 0.7 | 0.6 | 0.4 | 0.5 | 0.4 | 0.3 | 0.7 | 0.9 |
| | RROT (O.A.) [mm] | 0.8 | 0.6 | 0.5 | 0.5 | 0.5 | 0.4 | 0.6 | 0.8 |
| | RROB (O.A.) [mm] | 0.7 | 0.6 | 0.4 | 0.4 | 0.4 | 0.3 | 0.5 | 0.8 |
| | Durability (index) | 100 | 106 | 110 | 112 | 117 | 120 | 107 | 89 |

It could be confirmed from the test results that the uniformity performances of the tires of the present examples were improved when compared to those of the Comparative Examples and that the tires exhibited equivalent performances in view of durability.

## Claims

1. A method for manufacturing a radial tire for use in a two-wheeled motor vehicle which comprises a tread portion (2) whose tread surface (2a) extends from a tire equator (C) to tread ends (2e) upon curving in a convex arc-like manner, where in a condition in which the tire is assembled to a normal rim and in a normal internal pressure condition in which the tire is filled with normal internal pressure, a ratio (TW/h) of a tread width (TW) to a camber amount (h) is from 1.0 to 7.0, the tread width (TW) being a distance between the tread ends (2e, 2e) in a tire axial direction, the camber amount (h) being a distance from the tread ends (2e) to the tire equator (C) in a tire radial direction, the method comprising:
a strip wound body forming step of forming a strip wound body (10) that constitutes a tread rubber (Tg) by winding a rubber strip (S) having a width (W) of 5 to 30 mm and a thickness (t) of 0.3 to 1.5 mm spirally in a tire circumferential direction around an object to be wound (U) having an outer peripheral surface (Ua) that curves in a convex arc-like manner,
wherein
the strip wound body (10) is constituted from a single rubber strip (S1),
the method further comprises:
a first stage of winding the rubber strip (S1) from a winding start end (S1a) between the tread ends (2e, 2e) towards one tread end (2e);
a second stage of winding the rubber strip (S1) that has been folded over at the one tread end (2e) towards the other tread end (2e); and
a third stage of winding the rubber strip (S1) that has been folded over at the other tread end (2e) up to the tire equator (C) or proximate thereof to terminate thereat,
an angle (α) of a rubber strip (SP) on a front surface side that constitutes the tread surface (2a) is less than 15° with respect to the tire circumferential direction, and
said winding start end (S1a) is located on the tire equator (C).

2. The method for manufacturing a radial tire for use in a two-wheeled motor vehicle as claimed in Claim 1, wherein
the rubber strip (S1) is guided to the object to be wound (U) in a successive manner through a single supply head (14a) .

3. A method for manufacturing a radial tire for use in a two-wheeled motor vehicle which comprises a tread portion (2) whose tread surface (2a) extends from a tire equator (C) to tread ends (2e) upon curving in a convex arc-like manner, where in a condition in which the tire is assembled to a normal rim and in a normal internal pressure condition in which the tire is filled with normal internal pressure, a ratio (TW/h) of a tread width (TW) to a camber amount (h) is from 1.0 to 7.0, the tread width (TW) being a distance between the tread ends (2e, 2e) in a tire axial direction, the camber amount (h) being a distance from the tread ends (2e) to the tire equator (C) in a tire radial direction, the method comprising:
a strip wound body forming step of forming a strip wound body (10) that constitutes a tread rubber (Tg) by winding a rubber strip (S) having a width (W) of 5 to 30 mm and a thickness (t) of 0.3 to 1.5 mm spirally in a tire circumferential direction around an object to be wound (U) having an outer peripheral surface (Ua) that curves in a convex arc-like manner, wherein
the strip wound body (10) is constituted from a single rubber strip (S1),
the method further comprises:
a first stage of winding the rubber strip (S1) from a winding start end (S1a) at one tread end (2e) towards the other tread end (2e); and
a second stage of winding the rubber strip (S1) that has been folded over at the other tread end (2e) up to the tire equator (C) or proximate thereof to terminate thereat,
an angle (α) of a rubber strip (SP) on a front surface side that constitutes the tread surface (2a) is less than 15° with respect to the tire circumferential direction, and
the winding pitch of the rubber strip (S1) between said one tread end (2e) and the tire equator (C) is 0.5 times the winding pitch of the rubber strip (S1) between said other tread end (2e) and the tire equator (C).

4. The method for manufacturing a radial tire for use in a two-wheeled motor vehicle as claimed in Claim 1 or 3, wherein
a step of forming a band layer by spirally winding a strip-like ply, which is constituted from one or more cords coated by topping rubber, outside of the object to be wound (U) in the circumferential direction, is performed prior to the strip wound body forming step.

## Patentansprüche

1. Verfahren zum Herstellen eines Radialreifens zur Verwendung in einem zweirädrigen Kraftfahrzeug, der einen Laufflächenabschnitt (2) umfasst, dessen Laufflächen-Oberfläche (2a) sich von einem Reifenäquator (C) zu Laufflächenenden (2e) erstreckt, wobei sie sich auf eine Art und Weise eines konvexen Bogens krümmt, wobei unter einer Bedingung, unter der der Reifen auf eine normale Felge aufgezogen ist, und unter einer normalen Innendruckbedingung, unter der der Reifen mit einem normalen Innendruck gefüllt ist, ein Verhältnis (TW/h) der Laufflächenbreite (TW) zu einem Wölbungsbetrag (h) von 1.0 bis 7,0 beträgt, wobei die Laufflächenbreite (TW) ein Abstand zwischen den Laufflächenenden (2e, 2e) in einer Reifenaxialrichtung ist und der Wölbungsbetrag (h) ein Abstand von den Laufflächenenden (2e) bis zu dem Reifenäquator (C) in einer Reifenradialrichtung ist, wobei das Verfahren umfasst:
einen Streifenwickelkörper-Bildungsschritt eines Bildens eines Streifenwickelkörpers (10), der einen Laufflächenkautschuk (Tg) bildet, indem ein Kautschukstreifen (S), der eine Breite (W) von 5 bis 30 mm und eine Dicke (t) von 0,3 bis 1,5 mm aufweist, spiralförmig in einer Reifenumfangsrichtung um ein zu bewickelndes Objekt (U) gewickelt wird, das eine Außenumfangsfläche (Ua) aufweist, die sich in der Art und Weise eines konvexen Bogens krümmt,
wobei der Streifenwickelkörper (10) aus einem einzigen Kautschukstreifen (S1) gewickelt wird,
wobei das Verfahren ferner umfasst:
eine erste Stufe eines Wickelns des Kautschukstreifens (S1) von einem Wicklungsstartende (S1a) zwischen den Laufflächenenden (2e, 2e) zu einem Laufflächenende (2e) hin;
eine zweite Stufe eines Wickelns des Kautschukstreifens (S1), der an dem einen Laufflächenende (2e) umgeschlagen worden ist, zu dem anderen Laufflächenende (2e) hin; und
eine dritte Stufe eines Wickelns des Kautschukstreifens (S1), der an dem anderen Laufflächenende (2e) umgeschlagen worden ist, bis zu dem Reifenäquator (C) oder in die Nähe davon, um dort zu enden,
wobei ein Winkel (α) eines Kautschukstreifens (SP) an einer Vorderflächenseite, die die Laufflächen-Oberfläche (2a) bildet, kleiner als 15 Grad mit Bezug auf die Reifenumfangsrichtung ist, und
das Wicklungsstartende (S1a) auf dem Reifenäquator (C) angeordnet ist.

2. Verfahren zum Herstellen eines Radialreifens zur Verwendung in einem zweirädrigen Kraftfahrzeug nach Anspruch 1, wobei
der Kautschukstreifen (S1) auf das zu bewickelnde Objekt (U) auf eine sukzessive Weise über einen einzigen Vorschubkopf (14a) geführt wird.

3. Verfahren wird zum Herstellen eines Radialreifens zur Verwendung in einem zweirädrigen Kraftfahrzeug, der einen Laufflächenabschnitt (2) umfasst, dessen Laufflächen-Oberfläche (2a) sich von einem Reifenäquator (C) zu Laufflächenenden (2e) erstreckt, wobei sie sich auf eine Art und Weise eines konvexen Bogens krümmt, wobei unter einer Bedingung, unter der der Reifen auf eine normale Felge aufgezogen ist, und unter einer normalen Innendruckbedingung, unter der der Reifen mit einem normalen Innendruck gefüllt ist, ein Verhältnis (TW/h) der Laufflächenbreite (TW) zu einem Wölbungsbetrag (h) von 1.0 bis 7,0 beträgt, wobei die Laufflächenbreite (TW) ein Abstand zwischen den Laufflächenenden (2e, 2e) in einer Reifenaxialrichtung ist und der Wölbungsbetrag (h) ein Abstand von den Laufflächenenden (2e) bis zu dem Reifenäquator (C) in einer Reifenradialrichtung ist, wobei das Verfahren umfasst:
einen Streifenwickelkörper-Bildungsschritt eines Bildes eines Streifenwickelkörpers (10), der einen Laufflächenkautschuk (Tg) bildet, indem ein Kautschukstreifen (S), der eine Breite (W) von 5 bis 30 mm und eine Dicke (t) von 0,3 bis 1,5 mm aufweist, spiralförmig in einer Reifenumfangsrichtung um ein zu bewickelndes Objekt (U) gewickelt wird, das eine Außenumfangsfläche (Ua) aufweist, die sich in der Art und Weise eines konvexen Bogens krümmt,
wobei der Streifenwickelkörper (10) aus einem einzigen Kautschukstreifen (S1) gewickelt wird,
wobei das Verfahren ferner umfasst:
eine erste Stufe eines Wickelns des Kautschukstreifens (S1) von einem Wicklungsstartende (S1a) an einem Laufflächenende (2e) zu dem anderen Laufflächenende (2e) hin; und
eine zweite Stufe eines Wickelns des Kautschukstreifens (S1), der an dem anderen Laufflächenende (2e) umgeschlagen worden ist, bis zu dem Reifenäquator (C) oder in die Nähe davon, um dort zu enden,
wobei ein Winkel (α) eines Kautschukstreifens (SP) an einer Vorderflächenseite, die die Laufflächen-Oberfläche (2a) bildet, kleiner als 15 Grad mit Bezug auf die Reifenumfangsrichtung ist, und
wobei der Wicklungsteilungsabstand des Kautschukstreifens (S1) zwischen dem einen Laufflächenende (2e) und dem Reifenäquator (C) das 0,5 fache des Wicklungsteilungsabstandes des Kautschukstreifens (S1) zwischen dem anderen Laufflächenende (2e) und dem Reifenäquator (C) beträgt.

4. Verfahren zum Herstellen eines Radialreifens zur Verwendung in einem zweirädrigen Kraftfahrzeug nach Anspruch 1 oder 3, wobei
ein Schritt eines Bildens einer Bandschicht durch spiralförmiges Wickeln einer streifenartigen Lage, die aus einem oder mehreren mit einem Gummierungskautschuk beschichteten Korden gebildet ist, außerhalb des zu bewickelnden Objekts (U) in der Umfangsrichtung vor den Streifenwickelkörper-Bildungsschritt durchgeführt wird.

## Revendications

1. Procédé de fabrication d'un pneumatique radial destiné à être utilisé dans un véhicule motorisé à deux roues qui comprend une portion formant bande de roulement (2) dont la surface de roulement (2a) s'étend depuis un équateur du pneumatique (C) jusqu'à des extrémités de roulement (2e) en étant incurvée à la manière d'un arc convexe, dans lequel, dans une condition dans laquelle le pneumatique est assemblé sur une jante normale et dans une condition de pression interne normale dans laquelle le pneumatique est rempli avec une pression interne normale, un rapport (TW/h) d'une largeur de roulement (TW) sur une valeur de cambrage (h) est de 1,0 à 7,0, la largeur de roulement (TW) étant une distance entre les extrémités de roulement (2e, 2e) dans une direction axiale du pneumatique, la valeur de cambrage (h) étant une distance depuis les extrémités de roulement (2e) jusqu'à l'équateur du pneumatique (C) dans une direction radiale du pneumatique, le procédé comprenant :
une étape de formation d'un corps en bande enroulée consistant à former un corps en bande enroulée (10) qui constitue un caoutchouc de roulement (Tg) en enroulant une bande de caoutchouc (F) ayant une largeur (W) de 5 à 30 mm et une épaisseur (t) de 0,3 à 1,5 mm en spirale dans une direction circonférentielle du pneumatique autour d'un objet pour être enroulé (E) avec une surface périphérique extérieure (Ua) qui est incurvée à la manière d'un arc convexe, dans lequel le corps en bande enroulée (10) est constitué à partir d'une bande de caoutchouc unique (S1),
le procédé comprend en outre :
un premier stade consistant à enrouler la bande de caoutchouc (S1) depuis une extrémité de départ d'enroulement (S1a) entre les extrémités de roulement (2e, 2e) vers une extrémité de roulement (2e) ;
un second stade consistant à enrouler la bande de caoutchouc (S1) qui a été repliée à une extrémité de roulement (2e) vers l'autre extrémité de roulement (2e) ; et
un troisième stade consistant à enrouler la bande de caoutchouc (S1) qui a été repliée à l'autre extrémité de roulement (2e) vers l'équateur du pneumatique (C) ou à proximité de celui-ci pour se terminer à cet endroit,
un angle (α) d'une bande de caoutchouc (SP) sur un côté de surface frontale qui constitue la surface de roulement (2a) est inférieur à 15° par rapport à la direction circonférentielle du pneumatique, et
ladite extrémité de départ d'enroulement (S1a) est située sur l'équateur du pneumatique (C).

2. Procédé pour fabriquer un pneumatique radial destiné à être utilisé dans un véhicule motorisé à deux roues selon la revendication 1, dans lequel
la bande de caoutchouc (S1) est guidée vers l'objet à enrouler (U) d'une manière successive via une unique tête d'alimentation (14a).

3. Procédé pour fabriquer un pneumatique radial destiné à être utilisé dans un véhicule motorisé à deux roues qui comprend une portion formant bande de roulement (2) dont la surface de roulement (2a) s'étend depuis un équateur du pneumatique (C) jusqu'à des extrémités de roulement (2e) en étant incurvée à la manière d'un arc convexe, dans lequel, dans une condition dans laquelle le pneumatique est assemblé sur une jante normale et dans une condition à pression interne normale dans laquelle le pneumatique est rempli avec une pression interne normale, un rapport (TW/h) d'une largeur de roulement (TW) sur une valeur de cambrage (h) est de 1,0 à 7,0, la largeur de roulement (TW) étant une distance entre les extrémités de roulement (2e, 2e) dans une direction axiale du pneumatique, la valeur de cambrage (h) étant une distance depuis les extrémités de roulement (2e) jusqu'à l'équateur du pneumatique (C) dans une direction radiale du pneumatique, le procédé comprenant :
une étape de formation d'un corps en bande enroulée consistant à former un corps en bande enroulée (10) qui constitue un caoutchouc de roulement (Tg) en enroulant une bande de caoutchouc (F) ayant une largeur (W) de 5 à 30 mm et une épaisseur (t) de 0,3 à 1,5 mm en spirale dans une direction circonférentielle du pneumatique autour d'un objet à enrouler (U) ayant une surface périphérique extérieure (Ua) qui est incurvée à la manière d'un arc convexe, dans lequel le corps en bande enroulée (10) est constitué à partir d'une bande de caoutchouc unique (S1),
le procédé comprenant en outre :
un premier stade consistant à enrouler la bande de caoutchouc (S1) depuis une extrémité de départ d'enroulement (S1a) à une extrémité de roulement (2e) vers l'autre extrémité de roulement (2e) ; et
un second stade consistant à enrouler la bande en caoutchouc (S1) qui a été repliée à l'autre extrémité de roulement (2e) jusqu'à l'équateur du pneumatique (C) ou à proximité de celui-ci pour se terminer à cet endroit,
un angle (a) d'une bande en caoutchouc (SP) sur un côté de surface frontale qui constitue la surface de roulement (2a) est inférieur à 15° par rapport à la direction circonférentielle du pneumatique, et
le pas d'enroulement de la bande de caoutchouc (F1) entre ladite extrémité de roulement (2e) et l'équateur du pneumatique (C) est 0,5 fois le pas d'enroulement de la bande de caoutchouc (F1) entre ladite autre extrémité de roulement (2e) et l'équateur du pneumatique (C).

4. Procédé pour fabriquer un pneumatique radial destiné à être utilisé dans un véhicule motorisé à deux roues selon la revendication 1 ou 3, dans lequel
une étape, consistant à former une couche en bande par enroulement en spirale d'une nappe semblable à une bande, qui est constituée d'un ou plusieurs câblés revêtus par un caoutchouc d'enrobage, à l'extérieur de l'objet à enrouler (U) dans la direction circonférentielle, est exécutée avant l'étape de formage du corps en bande enroulée.
